# FASCICULE DE BREVET EUROPEEN

(11) **EP 0 978 697 B1**
(45) Date de publication et mention de la délivrance du brevet: **10.12.2003**
(21) Numéro de dépôt: 99401672.3
(22) Date de dépôt: 05.07.1999
(51) Int. Cl.: F25D 3/10

(54) **Dispositif et procédé d'injection d'un fluide frigorigene dans un appareil melangeur de produits**
Verfahren und Vorrichtung zur Einspritzung eines Kältemittels in eine Mischmaschine für Produkte
Method and device for injecting a refrigerant in a product mixing machine

(30) Priorité: 05.08.1998 FR 9810052
(43) Date de publication de la demande: 09.02.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cloarec, Alain, 91160 Longjumeau (FR)
(74) Mandataire: Mellul-Bendelac, Sylvie Lisette

(56) Documents cités:
- EP-A- 0 166 655
- EP-A- 0 252 312
- EP-A- 0 711 511
- FR-A- 1 416 735
- FR-A- 1 541 325
- FR-A- 2 302 479
- FR-A- 2 532 821
- US-A- 5 104 232
- US-A- 5 603 567

## Description

La présente invention est relative à un dispositif d'injection d'un fluide frigorigène dans un appareil mélangeur de produits.

Un tel appareil, également connu sous l'appellation "baratte", équipé d'un dispositif d'injection de fluide frigorigène, par exemple de l'azote, s'utilise notamment dans le domaine de l'industrie agroalimentaire pour surgeler séparément chaque ingrédient de plats cuisinés ou pour enrober avec de la sauce et surgeler simultanément des produits surgelés.

Dans l'état de la technique, un dispositif d'injection de fluide frigorigène dans un appareil mélangeur de produits comporte généralement une canalisation d'injection du fluide frigorigène équipée d'une canne d'injection destinée à être raccordée à l'appareil mélangeur et d'au moins une zone de section réduite adaptée pour créer une détente dans le fluide. Dans ce type de dispositif, la zone de section réduite est constituée par un orifice calibré positionné à l'extrémité de la canne d'injection, à l'entrée de la cuve de l'appareil mélangeur. Le fluide frigorigène, constitué classiquement d'azote liquide, est alors injecté dans la cuve par l'intermédiaire de la canne d'injection, à travers la zone de section réduite.

Cette construction permet de créer une détente dans le fluide frigorigène à l'entrée de la baratte. Elle présente toutefois un certain nombre d'inconvénients, notamment en raison du fait que l'orifice calibré ménagé dans la canne d'injection engendre une dispersion relativement importante du flux qui adopte une forme de cône. Elle ne permet donc pas d'obtenir une veine d'azote liquide pénétrant profondément à l'intérieur de la baratte.

Le but de l'invention est de pallier cet inconvénient et de fournir un dispositif d'injection de fluide frigorigène dans un appareil mélangeur de produits capable de créer une veine de fluide frigorigène de forme sensiblement cylindrique et précisément positionnée par rapport à l'entrée de l'appareil mélangeur.

Elle a donc pour objet un dispositif d'injection du type précité, caractérisé en ce que la ou chaque zone de section réduite est disposée en amont de la canne d'injection, en considérant le sens d'écoulement de fluide dans la canalisation.

Le dispositif d'injection selon l'invention peut en outre comporter une ou plusieurs des caractéristiques suivantes, prises isolément ou selon toutes les combinaisons techniquement possibles :
- il comporte en outre des moyens de séparation de phases liquide et gazeuse disposés en aval de la ou chaque zone de section réduite ;
- les moyens de séparation sont constitués par une partie coudée de la canalisation s'étendant entre ladite au moins une zone de section réduite et la canne d'injection ;
- la canalisation s'étend, en amont de la canne d'injection, selon une pente descendante en direction de cette dernière ;
- l'appareil mélangeur comportant une cuve dotée d'une pale rotative disposée au voisinage d'une zone de raccordement de la canne d'injection, le dispositif comporte en outre une vanne montée sur la canalisation et pilotée par un organe de commande d'injection cyclique du fluide frigorigène en phase avec la rotation de la pale ;
- la canne d'injection étant destinée à être montée sur une porte d'accès à la cuve, la canalisation est munie d'un joint tournant disposé en amont de la canne ;
- le joint tournant est disposé en amont des moyens de séparation ;
- il comporte en outre moyen de détection de la pression, tel qu'un manomètre, monté sur la canalisation, en amont de la canne ;
- il comporte en outre une vanne d'arrêt montée sur une extrémité de la canalisation opposée à la canne d'injection, destinée à être raccordée à une source d'alimentation en fluide frigorigène sous pression ; et
- le fluide frigorigène comporte de l'azote liquide.

On notera, au sujet des appareils munis de pales rotatives que la cuve peut alors être fixe ou bien elle-même en rotation également.

D'autres caractéristiques et avantages ressortiront de la description suivante, donnée uniquement à titre d'exemple, et faite en référence aux dessins annexés sur lesquels :
- la figure 1 est une vue en perspective d'un appareil mélangeur de produits équipé d'un dispositif d'injection selon l'invention ;
- la figure 2 est une vue de dessus d'une partie de l'appareil de la figure 1, montrant le dispositif d'injection de fluide frigorigène ; et
- la figure 3 est un schéma montrant la structure du dispositif d'injection montré sur la figure 2.

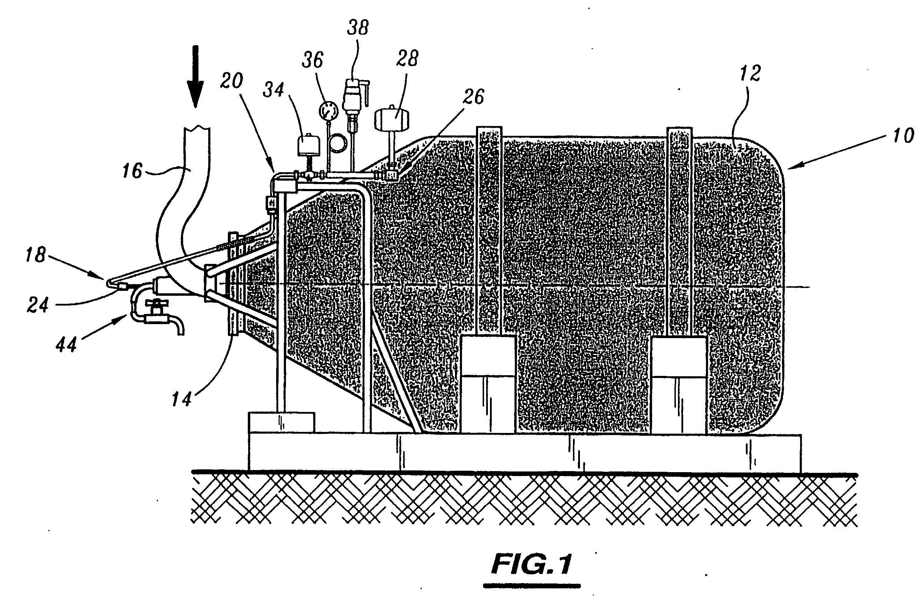

Sur la figure 1 on a représenté un appareil mélangeur de produits désigné par la référence numérique générale 10.

Il est destiné à être utilisé dans le domaine de l'industrie agroalimentaire, par exemple pour la préparation de plats cuisinés ou de mélanges de légumes surgelés portionnables, par mélange, enrobage avec de la sauce et surgélation simultanés de produits surgelés.

Un tel appareil est également susceptible d'être utilisé dans d'autres domaines, par exemple dans l'industrie pharmaceutique.

L'appareil 10 comporte une cuve 12 réalisée en un matériau approprié pour l'utilisation envisagée et équipée d'une porte d'accès 14 elle-même dotée d'une conduite 16 d'alimentation en produits à préparer.

Par ailleurs, l'appareil 10 est doté d'un dispositif d'injection d'un fluide frigorigène, désigné par la référence numérique générale 18 et schématiquement représenté sur cette figure, destiné à permettre la surgélation du mélange contenu dans la cuve 12.

Le dispositif d'injection 18 est également monté sur la porte d'accès 14 et est destiné à être raccordé à une source non représentée d'alimentation en un fluide frigorigène sous pression, constitué, dans l'exemple considéré, par de l'azote liquide.

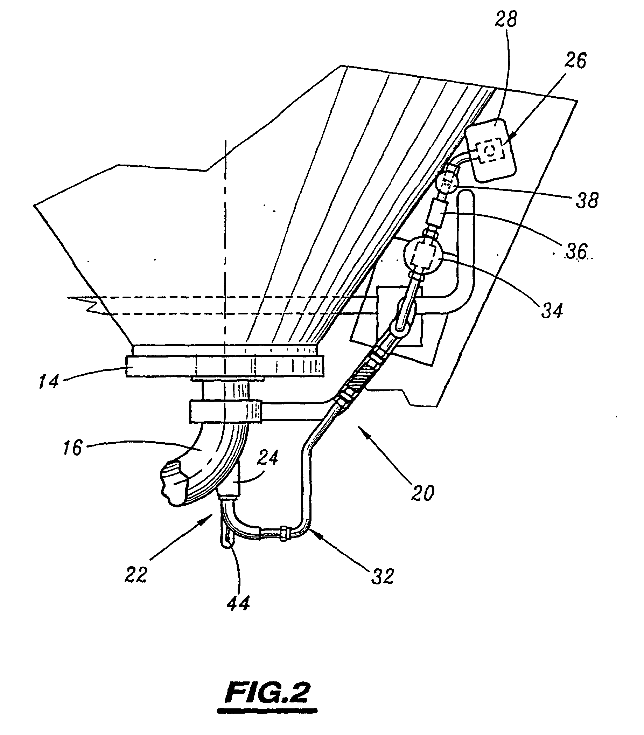

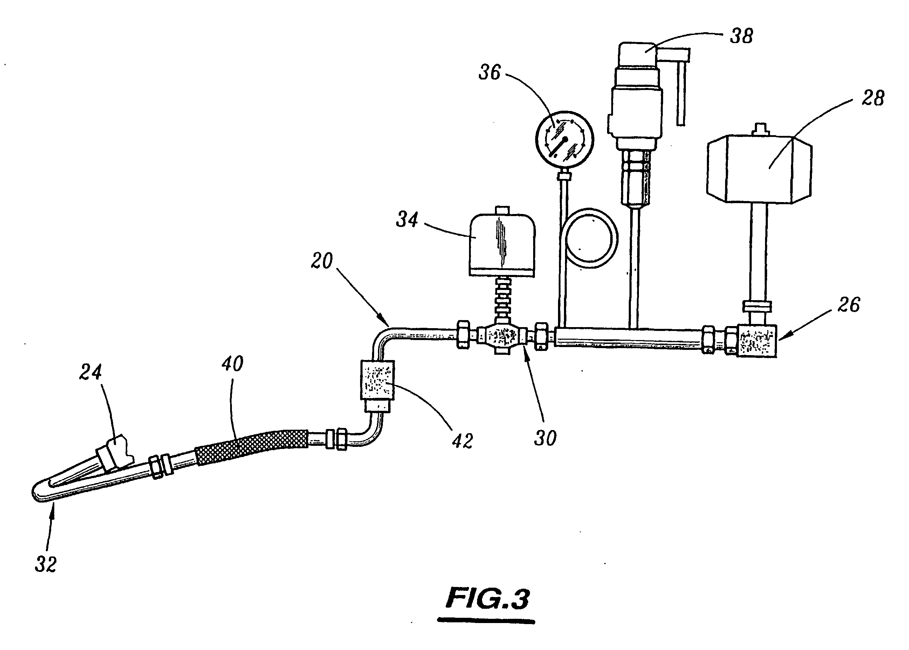

En se référant aux figures 2 et 3, on voit que le dispositif d'injection d'azote liquide comporte principalement une canalisation 20 dont une première extrémité 22 est dotée d'une canne 24 d'injection d'azote destinée à être raccordée à la porte 14 et d'une extrémité opposée 26 destinée à être raccordée à la source d'alimentation en azote liquide, par l'intermédiaire d'une vanne d'arrêt 28 munie d'un actionneur (cette vanne peut avoir bien entendu un fonctionnement manuel ou automatique).

La partie médiane 30 de la canalisation est dotée d'au moins une zone de section réduite adaptée pour créer une détente dans l'azote liquide circulant dans la canalisation 20.

Pour ce faire, la canalisation est dotée d'un passage calibré ménagé dans cette zone 30, c'est-à-dire placé en amont de la canne d'injection 24, en considérant le sens d'écoulement de l'azote liquide.

Par ailleurs, et comme on le voit sur les figures 2 et 3, la canalisation 20 comporte une partie coudée 32 s'étendant entre la canne d'injection 24 et la zone de section réduite 30 de manière à effectuer une séparation naturelle des phases liquide et gazeuse d'azote, en aval de l'orifice calibré 30, sous l'effet de la force centrifuge s'exerçant sur l'azote dans la partie coudée. Il est ainsi créée une veine de liquide circulant dans la partie externe du coude, tandis que la phase gazeuse créée sous l'effet du passage du fluide dans l'orifice calibré circule dans la partie interne du coude 32.

On voit par ailleurs sur les figures 2 et 3 que la canalisation 20 est en outre dotée d'une électrovanne 34 pilotée par un organe de commande de son fonctionnement (non représenté) adapté pour contrôler le débit dans la canalisation 20 selon un fonctionnement "tout ou rien", cette électrovanne étant disposée en aval de l'orifice calibré 30.

La canne d'injection 24 étant disposée au voisinage immédiat d'une pale rotative équipant de façon classique la cuve 12, à l'entrée de cette dernière, l'organe de pilotage du fonctionnement de l'électrovanne 34 provoque l'ouverture et la fermeture de cette dernière de façon cyclique en phase avec la rotation de la pale de manière à provoquer l'injection de l'azote liquide dans la cuve lorsque la pale se situe dans une position désaxée par rapport à la canne 24.

On évite ainsi tout risque d'injection d'azote liquide sur la pale mais également le risque d'injection de l'azote liquide sur le produit qui est déversé par la pale devant l'entrée de la cuve, ce qui provoquerait un refroidissement médiocre du mélange contenu dans la cuve 12 par apparition d'un gradient de température relativement important dans cette dernière.

Dans le but de fournir une indication précise de la pression d'azote liquide contenu dans la canalisation 20, un manomètre 36 est placé en amont de l'électrovanne 34 et en particulier en amont de l'orifice calibré 30 de manière à fournir une indication relativement constante de la valeur de la pression (pression totale) quel que soit le cycle de fonctionnement de l'électrovanne 34.

On voit par ailleurs sur les figures 2 et 3 qu'une soupape 38 est prévue en amont du manomètre 36.

En se référant à nouveau à la figure 2, on voit que l'ensemble constitué par la conduite 16 d'alimentation en produits et la canne d'injection 24 associée à l'extrémité correspondante de la canalisation 20 est monté sur la porte 14 de la cuve 12.

Afin de permettre une ouverture aisée de la porte, la canalisation 20 est dotée d'un joint de type tournant classique 42, et d'un flexible 40, permettant conjointement le déplacement de la canalisation selon au moins deux degrés de liberté.

On voit sur la figure 3 que la zone de la canalisation s'étendant en amont de la canne d'injection 24, de préférence jusqu'au flexible 40, adopte une configuration en pente douce en direction de la canne de manière à éviter toute rétention d'azote dans cette partie et permettre un égouttage aisé d'un liquide de nettoyage.

De préférence, la canalisation forme, dans cette zone, un angle de 15° par rapport à l'horizontal.

On voit enfin sur la figure 2 que la canalisation 20 comporte une prise de vide 44 permettant, comme cela est classique, d'évacuer l'air ambiant emplissant la cuve 12.

On conçoit que la configuration adoptée qui vient d'être décrite, qui utilise une canalisation dotée d'un orifice calibré en amont de la canne d'injection, et en aval de laquelle est prévue une zone coudée, permet d'une part d'effectuer la détente en amont de la zone d'injection, ce qui évite la création d'un flux divergent d'azote liquide en entrée de la baratte, et, d'autre part, de séparer naturellement, c'est-à-dire mécaniquement, dans la partie coudée, la phase liquide de la phase gazeuse créée en sortie de l'orifice calibré, ce qui permet l'injection à l'entrée de la cuve d'une veine franche de liquide, non dispersée, permettant ainsi d'atteindre efficacement le centre de la cuve et d'injecter l'azote liquide relativement profondément dans cette dernière.

On notera par ailleurs que l'invention n'est pas limitée au mode de réalisation décrit.

C'est ainsi que le dispositif d'injection décrit en référence aux figures 2 et 3 comporte un orifice calibré disposé en amont d'une électrovanne de commande d'injection d'azote. Il serait toutefois possible, en variante, de concevoir ces deux éléments en une pièce, en utilisant une vanne de diamètre interne approprié permettant de réaliser une détente.

## Revendications

1. Dispositif d'injection d'un fluide frigorigène dans un appareil (10) mélangeur de produit, le dispositif comprenant une canalisation (20) d'injection du fluide frigorigène équipée d'une canne d'injection (24) destinée à être raccordée à l'appareil mélangeur (10) et d'au moins une zone (30) de section réduite adaptée pour créer une détente dans le fluide, **caractérisé en ce que** la ou chaque zone (30) de section réduite est disposée en amont de la canne d'injection (24), en considérant le sens d'écoulement de fluide dans la canalisation (20).

2. Dispositif selon la revendication 1, **caractérisé en ce qu'**il comporte en outre des moyens de séparation (32) de phases liquide et gazeuse disposés en aval de la ou chaque zone (30) de section réduite.

3. Dispositif selon la revendication 2, **caractérisé en ce que** les moyens de séparation sont constitués par une partie coudée (32) de la canalisation (20) située entre ladite au moins une zone (30) de section réduite et la canne d'injection (24).

4. Dispositif selon l'une quelconque des revendications 1 à 3, **caractérisé en ce que** la canalisation (20) s'étend, en amont de la canne d'injection (24), selon une pente descendante en direction de cette dernière.

5. Dispositif selon l'une quelconque des revendications 1 à 4, **caractérisé en ce que**, l'appareil mélangeur (10) comportant une cuve (12) dotée d'une pale rotative, disposée au voisinage d'une zone de raccordement de la canne d'injection (24), le dispositif comporte en outre une vanne (34) montée sur la canalisation (20) et pilotée par un organe de commande d'injection cyclique du fluide frigorigène en phase avec la rotation de la pale.

6. Dispositif selon la revendication 5, **caractérisé en ce que** la canne d'injection (24) étant destinée à être montée sur une porte (14) d'accès à la cuve (12), la canalisation est munie d'un joint tournant (42) disposé en amont de la canne d'injection (24).

7. Dispositif selon la revendication 6, dépendante de la revendication 2, **caractérisé en ce que** le joint tournant (42) est disposé en amont des moyens de séparation (32).

8. Dispositif selon l'une quelconque des revendications 5 à 7, **caractérisé en ce qu'**il comporte en outre un moyen de détection de pression, (36) monté sur la canalisation (20) en amont de la vanne (34).

9. Dispositif selon l'une quelconque des revendications 1 à 8, **caractérisé en ce qu'**il comporte en outre au moins une vanne d'arrêt (28) montée sur une extrémité de la canalisation (20) opposée à la canne d'injection (24) destinée à être raccordée à une source d'alimentation en fluide frigorigène sous pression.

10. Dispositif selon l'une quelconque des revendications 1 à 9, **caractérisé en ce que** le fluide frigorigène comporte de l'azote liquide.

11. Procédé d'injection d'un fluide frigorigène dans un appareil (10) mélangeur de produit, à l'aide d'une canalisation (20) d'injection du fluide frigorigène équipée d'une canne d'injection (24) destinée à être raccordée à l'appareil mélangeur (10) et d'au moins une zone (30) de section réduite adaptée pour créer une détente dans le fluide, **caractérisé en ce que** l'on effectue la détente dans le fluide en amont de la canne d'injection (24), en considérant le sens d'écoulement de fluide dans la canalisation (20).

12. Procédé selon la revendication 11, **caractérisé en ce que** l'on effectue une séparation des phases liquide et gazeuse du fluide, en aval de la dite zone de la canalisation où l'on effectue la détente dans le fluide, de façon à injecter dans la cuve une veine de liquide substantiellement franc.

13. Procédé selon la revendication 12, **caractérisé en ce que** l'on effectue ladite séparation de phases en faisant circuler le fluide, en aval de la dite zone de la canalisation où l'on effectue la détente dans le fluide, dans une partie coudée (32) de la canalisation apte à effectuer une séparation mécanique des phases par effet centrifuge.

14. Procédé selon l'une des revendications 11 à 13, **caractérisé en ce que** l'appareil mélangeur (10) comportant une cuve (12) dotée d'une pale rotative, disposée au voisinage d'une zone de raccordement de la canne d'injection (24), on effectue un pilotage cyclique de l'injection du fluide frigorigène dans la cuve, en phase avec la rotation de la pale.

15. Procédé selon l'une des revendications 11 à 14, **caractérisé en ce que** le fluide frigorigène comporte de l'azote liquide.

## Claims

1. Device for injecting a refrigerant into a product mixer (10), the device comprising a pipe (20), for injecting the refrigerant, equipped with an injection nozzle (24) designed to be connected to the mixer (10) and with at least one region (30) of reduced cross section suitable for creating an expansion in the fluid, **characterized in that** the or each region (30) of reduced cross section is located upstream of the injection nozzle (24) with respect to the direction of flow of the fluid in the pipe (20).

2. Device according to Claim 1, **characterized in that** it furthermore comprises means (32) for separating the liquid and gas phases, the said means being located downstream of the or each region (30) of reduced cross section.

3. Device according to claim 2, **characterized in that** the separating means consist of a sharply-bent part (32) of the pipe (20), located between the said at least one region (30) of reduced cross section and the injection nozzle (24).

4. Device according to any one of Claims 1 to 3, **characterized in that** the pipe (20) extends, upstream of the injection nozzle (24), so as to slope downwards towards the latter.

5. Device according to any one of Claims 1 to 4, **characterized in that**, since the mixer (10) comprises a vessel (12) provided with a rotary blade, located near a region for connecting the injection nozzle (24), the device furthermore comprises a valve (34) mounted on the pipe (20) and operated by a control member for injecting the refrigerant cyclically in phase with the rotation of the blade.

6. Device according to Claim 5, **characterized in that**, since the injection nozzle (24) is designed to be mounted on a door (14) for access to the vessel (12), the pipe is fitted with a rotary seal (42) located upstream of the injection nozzle (24).

7. Device according to Claim 6, dependent on Claim 2, **characterized in that** the rotary seal (42) is located upstream of the separating means (32).

8. Device according to any one of Claims 5 to 7, **characterized in that** it furthermore comprises a pressure detection means (36) mounted on the pipe (20) upstream of the valve (34).

9. Device according to any one of Claims 1 to 8, **characterized in that** it furthermore comprises a shutoff valve (28) mounted on one end of the pipe (20), on the opposite side from the injection nozzle (24), intended to be connected to a supply of refrigerant under pressure.

10. Device according to any one of Claims 1 to 9, **characterized in that** the refrigerant comprises liquid nitrogen.

11. Process for injecting a refrigerant into a product mixer (10) using a pipe (20), for injecting the refrigerant, equipped with an injection nozzle (24) designed to be connected to the mixer (10) and with at least one region (30) of reduced cross section suitable for creating an expansion in the fluid, **characterized in that** the expansion is created in the fluid upstream of the injection nozzle (24) with respect to the direction of flow of the fluid in the pipe (20) .

12. Process according to Claim 11, **characterized in that** the liquid and gas phases of the fluid are separated, downstream of the said region of the pipe where the expansion in the fluid takes place, so as to inject a substantially clearly defined stream of liquid into the vessel.

13. Process according to Claim 12, **characterized in that** the said phase separation is carried out by making the fluid flow, downstream of the said region of the pipe where the expansion in the fluid takes place, in a sharply-bent part (32) of the pipe capable of causing mechanical separation of the phases by a centrifugal effect.

14. Process according to one of Claims 11 to 13, **characterized in that**, since the mixer (10) comprises a vessel (12) provided with a rotary blade, located near a region for connection of the injection nozzle (24), the refrigerant is injected into the vessel cyclically in phase with the rotation of the blade.

15. Process according to one of Claims 11 to 14, **characterized in that** the refrigerant comprises liquid nitrogen.

## Patentansprüche

1. Vorrichtung zur Einspritzung eines Kühlmittels in eine Mischmaschine (10) für Produkt, welche Vorrichtung eine Kanalisation (20) zum Einspritzen eines Kühlmittels umfasst, die mit einem Einspritzrohr (24) ausgestattet ist, das dazu bestimmt ist, an eine Mischmaschine (10) angeschlossen zu werden, und mindestens eine Zone (30) mit verringertem Querschnitt, die angepasst ist, um im Mittel eine Entspannung zu schaffen, **dadurch gekennzeichnet, dass** die oder jede Zone (30) mit verringertem Querschnitt flussaufwärts vom Einspritzrohr (24) angeordnet ist, wenn man die Strömungsrichtung des Mittels in der Kanalisation (20) betrachtet.

2. Vorrichtung nach Anspruch 1, **dadurch gekennzeichnet, dass** sie außerdem Mittel zum Trennen (32) der flüssigen und gasförmigen Phase umfasst, die flussabwärts von der oder jeder Zone (30) mit verringertem Querschnitt angeordnet sind.

3. Vorrichtung nach Anspruch 2, **dadurch gekennzeichnet, dass** die Mittel zum Trennen aus einem abgewinkelten Teil (32) der Kanalisation (20) bestehen, die zwischen der mindestens einen Zone (30) mit verringertem Querschnitt und dem Einspritzrohr (24) liegt.

4. Vorrichtung nach einem der Ansprüche 1 bis 3, **dadurch gekennzeichnet, dass** sich die Kanalisation (20) flussaufwärts vom Einspritzrohr (24) mit einem sinkenden Gefälle zu letztem erstreckt.

5. Vorrichtung nach einem der Ansprüche 1 bis 4, **dadurch gekennzeichnet, dass** die Mischmaschine (10), da sie einen Behälter (12) mit einer Drehschaufel umfasst, die in der Nähe einer Anschlusszone des Einspritzrohrs (24) angeordnet ist, außerdem einen Schieber (34) umfasst, der auf die Kanalisation (20) montiert und von einem Steuerorgan zum zyklischen Einspritzen des Kühlmittels in Phase mit der Schaufeldrehung gesteuert wird.

6. Vorrichtung nach Anspruch 5, **dadurch gekennzeichnet, dass**, weil das Einspritzrohr (24) zum Installieren auf einer Zugangstür (14) zum Behälter (12) bestimmt ist, die Kanalisation mit einer Drehdichtung (42) versehen ist, die flussaufwärts vom Einspritzrohr (24) angeordnet ist.

7. Vorrichtung nach Anspruch 6, abhängig von Anspruch 2, **dadurch gekennzeichnet, dass** die Drehdichtung (42) flussaufwärts von Trennmitteln (32) angeordnet ist.

8. Vorrichtung nach einem der Ansprüche 5 bis 7, **dadurch gekennzeichnet, dass** sie außerdem ein Mittel (36) zum Erfassen des Drucks umfasst, das auf der Kanalisation (20) flussaufwärts vom Schieber (34) installiert ist.

9. Vorrichtung nach einem der Ansprüche 1 bis 8, **dadurch gekennzeichnet, dass** sie außerdem mindestens einen Absperrschieber (28) umfasst, der auf einem Ende der Kanalisation (20) gegenüber dem Einspritzrohr (24) installiert ist, der dazu bestimmt ist, an eine Versorgungsquelle mit Kühlmittel unter Druck angeschlossen zu werden.

10. Vorrichtung nach einem der Ansprüche 1 bis 9, **dadurch gekennzeichnet, dass** das Kühlmittel flüssigen Stickstoff umfasst.

11. Einspritzverfahren eines Kühlmittels in eine Mischmaschine (10) für Produkt mit Hilfe einer Kanalisation (20) zum Einspritzen von Kühlmittel, ausgestattet mit einem Einspritzrohr (24), das dazu bestimmt ist, an die Mischmaschine (10) angeschlossen zu werden und mit mindestens einer Zone (30) mit verringertem Querschnitt, die angepasst ist, um eine Entspannung des Mittels zu schaffen, **dadurch gekennzeichnet, dass** man das Entspannen im Mittel flussaufwärts vom Einspritzrohr (24) vornimmt, wenn man die Strömungsrichtung des Mittels in der Kanalisation (20) betrachtet.

12. Verfahren nach Anspruch 11, **dadurch gekennzeichnet, dass** man ein Trennen der flüssigen und der gasförmigen Phase des Mittels flussabwärts von der Kanalisationszone, in der man das Entspannen des Mittels durchführt, vornimmt, um in den Behälter einen im Wesentlichen stetigen Strahl einzuspritzen.

13. Verfahren nach Anspruch 12, **dadurch gekennzeichnet, dass** man die Trennung der Phasen durchführt, indem man das Mittel flussabwärts von der Kanalisationszone, in der man das Entspannen des Mittels durchführt, in einem abgewinkelten Teil (32) der Kanalisation, der dazu geeignet ist, eine mechanische Trennung der Phasen durch Zentrifugalwirkung durchzuführen, zirkulieren lässt.

14. Verfahren nach einem der Ansprüche 11 bis 13, **dadurch gekennzeichnet, dass**, da die Mischmaschine (10) einen Behälter (12) mit einer Drehschaufel umfasst, die in der Nähe einer Anschlusszone des Einspritzrohrs (24) angeordnet ist, ein zyklisches Steuern der Einspritzung des Kühlmittels in den Behälter in Phase mit der Schaufeldrehung durchführt.

15. Verfahren nach einem der Ansprüche 11 bis 14, **dadurch gekennzeichnet, dass** das Kühlmittel flüssigen Stickstoff enthält.
